# EUROPEAN PATENT APPLICATION

(11) **EP 4 353 787 A1**
(43) Date of publication of application: **17.04.2024**
(21) Application number: 22425047.2
(22) Date of filing: 12.10.2022
(51) Int. Cl.: C09D 11/101, C09D 11/322, C09D 11/38

(54) **INK COMPOSITION CURABLE BY ULTRAVIOLET RADIATION**

(71) Applicant: NEOS S.r.l., 41042 Fiorano Modenese (MO) (IT)
(72) Inventor: PALUMBO, Vincenzo, 41042 Fiorano Modenese (MO) (IT)
(74) Representative: Botti & Ferrari S.p.A.

(57) **Abstract**

A digital ink composition curable by ultraviolet (U.V.) radiation comprising an inorganic component, comprising at least one inorganic pigment and a frit, and an organic component, comprising at least one acrylate or methacrylate monomer and a photoinitiator, and process of application to a ceramic substrate thereof.

## Description

### Application field

The present invention relates to the ceramic industry field. In particular, to a digital ink composition curable by ultraviolet (U.V.) radiation for ceramic substrates.

Also, the present invention relates to a process for the application of a digital ink composition curable by ultraviolet (U.V.) radiation on ceramic substrates.

Furthermore, the present invention relates to a decorated ceramic manufactured product thus realized.

Moreover, the present invention relates to a plant for the deposition of the aforesaid ink composition curable by ultraviolet radiation.

### Background art

It is known that ceramic substrates are not easy to decorate, in particular due to the high temperatures to which such substrates are subjected during the firing processes. In fact, organic pigments, for example, cannot be used, since any organic pigment-based ink could undergo thermal degradation at the temperatures to which a ceramic substrate is subjected.

Traditionally, for the decoration of ceramic substrates, inks (or ceramic glazes) with properties suitable to the application on such materials are used. A ceramic ink is formed by:
- a solid part comprising inorganic pigments, suitable to stand the high temperatures of the firing cycle between 1100°C and 1200°C (on the contrary, organic pigments decompose during the firing step);
- a liquid part consisting of carriers and additives having a dispersing function, in particular, solvents, which are responsible for the regulation of parameters such as viscosity, surface tension and drying times.

Furthermore, the solid part can contain also a "frit", base material of all ceramic glazes, *i.e.,* generally a mixture of oxides of different origin, such as silicates, borosilicates, zinc oxides, and the like. It is prepared by melting the various components, which are cooled rapidly and grinded in granules of small dimensions.

The frit formulation determines the physical, chemical, and mechanical characteristics of the glaze: for example, oxides allow the opacifier and colorant effect; other minerals or agents can increase the adhesion properties of the glaze.

An important requirement for digital inks is the particle size of the solid component. Since the digital ink is applied by a printing head, which consists of nozzles of micrometric dimensions, it is required that the solid part, or dispersion, has nanometric o sub-micrometric dimensions, since bigger dimensions could cause agglomerates and thus resulting in obstruction of the nozzles of the printing heads themselves.

Another important parameter for digital inks is viscosity, which has to be comprised in specific ranges in order to ensure the adequate operation of the ink in the printing head, the adequate drop formation and the thus resulting lack of printing defects.

Traditionally, digital inks have solvents as a carrier and the process of drop fixing of traditional digital inks on ceramic substrates before firing requires the application of the ink mixture directly on the hot support. In this way, the solvent evaporates and the pigment, which determines the obtainment of a decorative pattern, remains on the ceramic substrate. In another method, inks can be fixed by IR lamps heating the support on which the ink was previously deposited. Also in this case, the process involves the solvent evaporation and the maintenance of the pigment on the ceramic substrate.

In order to ensure a coating without defects and with the desired colors and finishing, during the years the frit chemical composition was optimized, varying parameters as the dilatation coefficient and the capacity of adhesion to the support.

Sometimes, to improve the adhesion properties and make the decorative pattern more durable over time, adhesive substrates are applied before the deposition of traditional inks. However, such substrates are not always adapted to all the ceramic substrates and, anyway, this expedient does not allow to lower the high temperatures of the fixing step.

Finally, the high temperatures used during the ink fixing step cause the solvent evaporation, thereby resulting in the formation of waste products, in the form of emissions polluting the environment.

The technical problem underlying the aforesaid invention is providing an ink composition for ceramic substrates allowing to overcome the previously described drawbacks, in particular that does not have to undergo to high temperature fixing operations, as well as ensures a suitable adhesion, obtaining a support coated by a decorative pattern durable over time.

### Summary of the invention

The aforementioned problem has been solved providing an ink composition curable by ultraviolet (U.V.) radiation comprising:
- an inorganic component comprising at least one inorganic pigment and a frit;
- an organic component comprising at least one acrylate or methacrylate monomer and a photoinitiator.

In particular, the term "frit" means a glass mixture, obtained by melting silica and/or alkaline oxides and sometimes boric anhydride, and which, after grinding, is applied on the ceramic substrate.

Preferably, such frit comprises an element selected from silica and/or a solvate thereof, a silica mineral, a silicate, a metal oxide, a metal oxide-based mineral, a nonmetal oxide, a metal silicide, or any combination thereof.

Preferably, such frit comprises silica or a solvate thereof, more preferably silica and/or a hydrate thereof.

More preferably such frit comprises at least one metal oxide, said at least one metal oxide being selected from lithium oxide, sodium oxide, magnesium oxide, potassium oxide, calcium oxide, strontium oxide, barium oxide, zinc oxide, lead oxide, aluminum oxide, titanium oxide, zirconium oxide and/or any combination thereof.

More preferably, such at least one metal oxide is zinc oxide.

More preferably, such at least one nonmetal oxide is boron oxide.

Preferably, such frit is a boron alkaline frit, more preferably said frit comprising silica and/or a solvate thereof and boron oxide, even more preferably said frit comprising silica and a mixture of boron oxide and zinc oxide.

Preferably, the silica mineral is selected from quartz, a quartz polymorph mineral, opal, or any combination thereof.

Preferably, silicates are selected from feldspars, kaolin, phyllosilicates, in particular talc, borosilicates or any combination thereof.

Preferably, the frit comprises additionally any one from sodium tetraborate and/or hydrates thereof, a carbonate or a combination thereof.

More preferably, the carbonate is an alkaline metal carbonate, an alkaline earth metal carbonate or a combination thereof, even more preferably said carbonate is selected from calcium carbonate, barium carbonate, potassium carbonate or any combination thereof.

Preferably, the composition according to the invention comprises at least one acrylate or methacrylate monomer which may be selected from an alkyl acrylate, an alkyl methacrylate, a diol diacrylate, a diol dimethacrylate, a polyol diacrylate, a polyol dimethacrylate, a polyol triacrylate, a polyol trimethacrylate, a glycolic monomer acrylate or any combination thereof.

More preferably, said at least one alkyl acrylate may be selected from octyl decyl acrylate, tetrahydrofurfuryl acrylate, isobornyl acrylate, ethyl acrylate, n-propyl acrylate, isopropyl acrylate, or any combination thereof.

According to an alternative embodiment, said at least one alkyl acrylate may comprise an ethoxylated and/or propoxylated alkyl chain.

More preferably, said polyol triacrylate may be selected from glycerolpropoxy triacrylate, trimethylolpropane ethoxylated triacrylate, trimethylolpropane triacrylate or any combination thereof.

More preferably, said glycolic monomer acrylate may be selected from tri(propylen glycol) diacrylate (TPGDA), dipropylenglycol diacrylate (DPGDA), tri(ethylen glycol) dimethacrylate or any mixture thereof.

According to a preferred embodiment thereof, the ink composition curable by ultraviolet radiation according to the invention may comprise also at least one acrylate oligomer.

More preferably, in the composition according to the invention such at least one acrylate oligomer is selected from polyester acrylate, epoxy acrylate, urethane acrylate, acryl-acrylate, vinyl-acrylate, polyether acrylate or any combination thereof.

In particular, the at least one acrylate oligomer above may be a mono- or poly-functional oligomer.

For example, the at least one acrylate oligomer may be an amino-modified polyester.

In particular, in the composition according to the invention such acrylate oligomer may contain aliphatic and/or aromatic carbon chains.

Preferably, in the composition according to the invention said photoinitiator may be a Norrish I type photoinitiator or a Norrish II type photoinitiator.

Advantageously, photoinitiators allow the crosslinking of the ink composition curable by ultraviolet radiation due to ionic or radical processes, started from photoinitiators able to absorb the ultraviolet radiation of the ultraviolet-visible spectrum, for example U.V.-A, U.V.-B and U.V.-C.

Preferably, in the composition according to the invention, said photoinitiator is selected from phosphines, phosphine oxide, thioxanthones, ketocoumarines, alpha-hydroxy-ketones, benzyldimethylketal, benzophenones, amino-ketones, ketosulphones, glyoxylates or any combination thereof.

In particular, photoinitiators have different nature according to the type of used U.V. lamp.

Photoinitiators, predominantly used for applications with LED lamps at 365 nm, 385-395 nm, belong to the chemical family of acyl phosphines, phosphine oxide, thioxanthones and ketocoumarines.

For crosslinking obtained from Hg lamps, alpha-hydroxy-ketones, benzyldimethylketal, benzophenones, amino-ketones, ketosulphones, glyoxylates, phosphine oxide, thioxanthones and/or ketocoumarines photoinitiators may be used.

Preferably, the photoinitiator is a phosphine oxide, a phosphine or a combination thereof, even more preferably is an acyl phosphine.

Most preferably, the photoinitiator is phenylbis (2,4,6-trimethylbenzoyl) phosphine oxide or diphenyl (2,4,6-trimethylbenzoyl) phosphine oxide or any combination thereof.

Alternatively, such photoinitiator is a compound belonging to the thioxanthone family.

More preferably, the photoinitiator is selected from 2,4-diethylthioxanthone, 4-isopropyl-thioxanthone, 2-isopropyl-thioxanthone or any combination thereof.

Most preferably, the photoinitiator is 2,4-diethylthioxanthone or 2-isopropyl-thioxanthone.

Alternatively, the photoinitiator is a compound belonging to the ketocoumarine family.

Preferably, the inorganic component may be present in an amount comprised between 30%-65% by weight based on the total weight of the ink composition curable by ultraviolet radiation.

Preferably the organic component may be present in an amount comprised between 35%-70% by weight based on the total weight of the ink composition curable by ultraviolet radiation.

Preferably, the frit amount is comprised between 5% and 50%, more preferably 10% and 35%, by weight based on the total weight of the ink composition curable by ultraviolet radiation.

Preferably, the frit amount is comprised between 45% and 75% by weight based on the weight of the acrylate or methacrylate monomer, more preferably between 55% and 65% by weight based on the weight of the acrylate or methacrylate monomer.

Alternatively, when in the organic component is additionally present an acrylate oligomer, the frit amount is comprised between 45 and 75% by weight based on the weight of the acrylate or methacrylate monomer and the acrylate oligomer added together, more preferably between 55% and 65% by weight based on the weight of the acrylate or methacrylate monomer and the acrylate oligomer added together.

Preferably, the inorganic pigment amount is comprised between 5% and 30%, more preferably 8% and 20%, by weight based on the weight of the ink composition curable by ultraviolet radiation.

Preferably, the acrylate or methacrylate monomer amount is comprised between 15% and 75%, more preferably 40% and 65%, by weight based on the weight of the ink composition curable by ultraviolet radiation.

Preferably, the oligomer acrylate amount is comprised between 0% and 50%, more preferably 5% and 30%, by weight based on the weight of the ink composition curable by ultraviolet radiation.

Preferably, the photoinitiator is present in an amount comprised between 0.5% and 8%, more preferably between 1% and 6%, by weight based on the weight of the ink composition curable by ultraviolet radiation.

According to a preferred embodiment, the ink composition curable by ultraviolet radiation of the invention may consists of the following components, shown as percentage by weight based on the total weight of the composition:

| | |
|---|---|
| acrylate or methacrylate monomer | 15-75 |
| acrylate oligomer | 0-50 |
| photoinitiator | 0.5-8 |
| inorganic pigment | 5-30 |
| frit | 5-50 |

Preferably, the ink composition curable by ultraviolet radiation has a viscosity comprised between 5cP-50cP, measured at a temperature comprised between 20°C and 60°C.

The viscosity was measured according to the following procedure:
- a sample of the ink composition curable by ultraviolet radiation was placed in an Anton Paar ViscoQC100-L rotational viscosimeter equipped with a double gap geometry probe (DG26); the measure was taken at 30°C and the temperature was controlled by a Julabo thermostat;
- the impeller was driven at speed of 20 rpm and kept at such speed steadily for 5 minutes;
- the detected dynamic viscosity value was recorded.

Preferably, in the ink composition curable by ultraviolet radiation the inorganic component, *i.e.,* said frit and said inorganic pigment, has an average particle size comprised between 50 nm and 500 nm, measured with Mastersizer 3000 granulometer.

Advantageously, such ink composition curable by ultraviolet radiation is solvent-free, thus allowing to overcome the issues related with high temperature fixing operations, in particular organic solvent evaporation during the ceramic decoration processes.

Further, such ink composition curable by ultraviolet radiation may be applied advantageously directly on the ceramic substrate surface, also ensuring suitable adhesion characteristics, obtaining a ceramic substrate covered by a decorative pattern durable over time.

Advantageously, the ink composition curable by ultraviolet radiation of the invention can therefore be used for the application to ceramic surfaces and further on glass surfaces, such as glass panels or sheets.

The aforesaid technical problem is solved also by a process for the application of ink compositions curable by U.V. according to the invention on ceramic substrates comprising the steps of:
a) providing an ink composition curable by ultraviolet radiation comprising an inorganic component comprising at least one inorganic pigment and a frit, and an organic component comprising at least one acrylate or methacrylate monomer and a photoinitiator;
b) providing a ceramic substrate;
c) applying on the ceramic substrate the aforesaid ink composition curable by ultraviolet radiation, defining a decorative pattern;
d) fixing said ink composition curable by ultraviolet radiation on the aforesaid ceramic substrate by ultraviolet radiation curing;
e) firing the thus decorated ceramic substrate.

Preferably, during step c) of application the ink composition curable by ultraviolet radiation has a viscosity comprised between 5cP-50cP, measured at a temperature comprised between 20°C and 60°C.

More preferably, during step c) of application the ink composition curable by ultraviolet radiation has a temperature in the printing head comprised between 20°C and 60°C.

Advantageously, the regulation of the viscosity parameters, modulated on the characteristics of the printing heads, allows to overcome any nozzle obstruction during the dispensing of the ink composition curable by ultraviolet radiation.

Preferably, in the ink composition curable by ultraviolet radiation provided during aforesaid step a), the inorganic component, *i.e.,* said frit and said inorganic pigment, has an average particle size comprised between 50 nm and 500 nm.

Preferably, step a) of providing an ink composition curable by ultraviolet radiation comprises the following steps:
- grinding the frit and the inorganic pigments to obtain an inorganic component having an average particle size comprised between 50 nm and 500 nm;
- dispersing the thus obtained inorganic component in at least one acrylate or methacrylate monomer to form a dispersion;
- adding at least one photoinitiator to the previously obtained dispersion to obtain an ink composition curable by ultraviolet radiation.

Advantageously, the grinding step allows to obtain an average particle size suitable to the application of the ink composition curable by ultraviolet radiation by specific nozzles included in printing devices, for example digital printing devices.

Advantageously, the viscosity comprised in the above defined range allows to facilitate properly the operation of the ink in the printing head and the drop formation during step c) of application and to avoid any printing defects.

In particular, during step d) of fixing the ink composition curable by ultraviolet radiation on the aforesaid ceramic substrate by ultraviolet radiation curing, the crosslinking of the ink composition determines the obtaining of a ceramic substrate with a solidified decorative pattern.

Advantageously, step d) of fixing the ink composition curable by ultraviolet radiation on the aforesaid ceramic substrate by ultraviolet radiation curing is performed without heating.

In other words, aforesaid step d) is performed without heat supply, by convection and/or radiation, by external equipment *i.e.,* it is performed at room temperature.

The term "at room temperature" means the temperature of the surrounding environment wherein the process of the invention takes place, for example, a temperature comprised between 15°C-35°C, in particular between 18°C-25°C can be understood.

In particular, the process of the invention does not provide for the use of solvents, avoiding the production of waste materials during the fixing process, for example in the form of gas emissions, as toxic fumes, or vapors, and allows to eliminate the discoloration caused by the traditional processes, usually related to the solvent evaporation conditions.

Coherently, since step d) of fixing the ink composition curable by ultraviolet radiation takes place at room temperature, high temperatures are not applied and therefore the process of the invention allows to overcome all the issues caused by high temperatures otherwise applied during the step of fixing the ink composition curable by ultraviolet radiation.

Even more advantageously, by removing the steps of fixing at high temperature, the costs of the process of ceramic substrates decoration are reduced.

As anticipated in relation to the ink composition curable by ultraviolet radiation of the invention, showing suitable adhesion characteristics, the process of the invention allows to obtain a ceramic substrate covered by a decorative pattern durable over time, simplifying the process steps of application of ink compositions on ceramic substrates, for example avoiding the application of adhesive layers.

Preferably, during step d) of fixing, the curing or crosslinking is performed by the use of a U.V., LED, or Hg lamp.

Preferably, during step d) of fixing, the curing may take place partially or totally.

Preferably, step d) of fixing is performed at a process speed ranging from 15 m/min to 50 m/min.

Preferably, during said step d) of fixing the ultraviolet radiation has a wavelength comprised generally between 150 nm and 420 nm.

In particular, step d) of fixing may be performed by a LED lamp or a mercury vapor lamp.

More preferably, said step d) of fixing may be performed by means of a LED lamp concentrating the power peak at a specific wavelength, comprised between 278 nm and 405 nm, more preferably between 385 nm and 405 nm.

Specifically, said LED lamp may have a power up to 36 Watt and may be at single or multiple windows.

Alternatively, said step d) of fixing may be performed by means of a mercury vapor lamp concentrating the power peak at a specific wavelength, comprised between 150 nm and 420 nm.

Specifically, said mercury lamp may be a medium pressure mercury lamp and shows a power up to 240 Watt.

Therefore, with respect to the traditional decoration technology wherein the solvent-based ink is used, such ink composition curable by ultraviolet radiation and the application method allow to obtain decorative methods at ceramic level without using solvents and high temperatures, without modifying chemical-physical characteristics of the decorated ceramic product so to ensure a decoration without defects and with desired colors and finishing.

Further, the present invention can therefore certainly determinate a great advantage from the point of view of its sustainability in both economic and environmental terms.

The above outlined technical problem is solved also by a ceramic manufactured product, preferably in the form of a ceramic panel having at least one planar surface, obtainable by the process according to the invention.

Substantially, the ceramic manufactured product according to the present invention comprises a ceramic substrate, a printing pattern directly contacted to the surface of the ceramic substrate and obtained from the aforesaid ink composition curable by ultraviolet radiation.

In particular, the ceramic manufactured product according to the present invention comprises a ceramic panel having at least one planar surface, wherein said printing pattern is directly contacted to such at least one planar surface.

The above outlined technical problem is solved also by a plant comprising a printing system for ink compositions curable by ultraviolet radiation.

Such printing line comprises in turn the following units:
- a printing station having a plurality of printing modules, said modules comprising one or more printing heads prepared for the application of an ink composition curable by ultraviolet radiation;
- a fixing station comprising fixing means of the ink composition curable by ultraviolet radiation, wherein said fixing means consists of an ultraviolet light lamp and are placed at the output of said printing station.

Preferably, said printing station is a digital printer.

Preferably, said ultraviolet light lamp is a LED lamp or a mercury (Hg) vapor lamp that can concentrate the power peak at a specific wavelength comprised, according to the project choices, between 150 nm and 420 nm.

In particular, given the partially multi-chromatic nature of the emitted ultraviolet radiation, both the possible LED lamp and possible mercury vapor lamp can concentrate a plurality of power peaks at more specific wavelengths.

Specifically, the LED lamp can concentrate a plurality of power peaks at a wavelength comprised between 385 nm and 405 nm; vice versa, the mercury vapor lamp can concentrate a plurality of power peaks at a wavelength comprised between 150 nm and 420 nm.

The present plant, arranged to the execution of the process according to the invention, comprises also a firing station downstream of the printing system.

In particular, such firing station is adapted to the execution of the aforesaid firing step.

Further characteristics and advantages will become more apparent from the detailed description given below of a preferred but not exclusive embodiment of the present invention, with reference to the accompanying Figures given by way of non-limiting example, as well as comprising, as mentioned, some experimental Examples.

### Brief description of the drawings

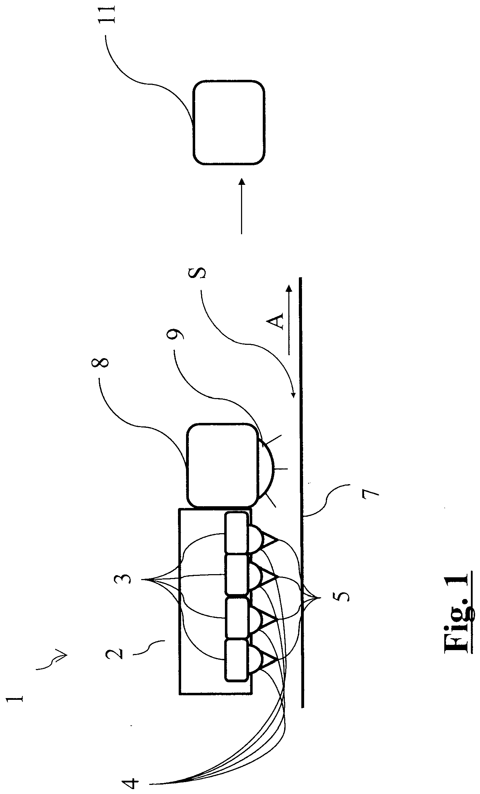

Figure 1 shows a printing system according to the present invention.

### Detailed description

The ink composition curable by ultraviolet radiation according to the present invention was used in a process for the application of a layer of ink curable by ultraviolet radiation to a ceramic substrate.

The process according to the invention was performed with the aid of a printing system comprised within a suitable plant.

With reference to accompanying Figure 1, 1 globally identifies such printing system.

The printing system 1 is illustrated schematically in the aforesaid Figure, omitting some known constructive elements and graphical simplification of the represented elements.

In the following description, terms such as above, below, lower, upper, or derivatives thereof are to be understood with reference to the standard use configuration of the printing system 1 illustrated in the aforesaid Figures.

In particular, the printing system 1 comprises a printing station 2, which is designed for the realization on the printing area S of at least one decorative pattern on ceramic substrates.

The printing station 2 is arranged to be placed above the ceramic substrate, which is housed above a printing support 7. The printing support 7 is movable and moves in an advancement direction A, transversal to the printing front.

The printing station 2 further comprises a plurality of printing modules 3, cantilevered above the printing area S, which follow each other along the advancement direction A and are substantially placed next to each other.

Each printing module 3 has a lower part developing in the vicinity of the printing area S and housing a plurality of printing heads 4 comprising nozzles 5. Such printing heads 4 are naturally facing the printing area S with nozzles 5.

The fixing station 8, placed downstream of such printing station 2 along the advancement direction A, comprises the fixing means 9 of the ink composition curable by ultraviolet radiation, adapted to emit U.V. radiations for the curing of the ink composition curable by ultraviolet radiation according to the present invention.

Further, the printing system 1 is equipped with advancement means, not represented, to move the printing support 7 according to the advancement direction A.

The speed at which the advancement means are set, during the fixing step, can range between 15 m/min and 50 m/min. Such speed can be set considering the type of the used fixing means 9 and the characteristics of the ink composition curable by ultraviolet radiation, as below specified.

The fixing means 9 may be a LED lamp or mercury vapor lamp that can concentrate the power peak at a specific wavelength, comprised according to the project choices between 150 nm and 420 nm.

In particular, given the partially multi-chromatic nature of the emitted ultraviolet radiation, both the possible LED lamp and possible mercury vapor lamp can concentrate a plurality of power peaks at more specific wavelengths.

Specifically, the LED lamp can concentrate a plurality of power peaks at a wavelength comprised between 385 nm and 405 nm; vice versa, the mercury vapor lamp can concentrate a plurality of power peaks at a wavelength comprised between 150 nm and 420 nm.

In the plant arranged for the execution of the process according to the invention downstream of the printing system 1 a firing station 11 is present, adapted to the execution of the aforesaid firing step.

Experimental Examples will now follow wherein ink compositions according to the present invention different from each other are used in a process for the application of a layer of ink compositions curable by ultraviolet radiation on ceramic substrates.

### Example 1

Firstly, the frit was prepared by mixing alkaline silicates and borates, in particular as indicated in following Table 1. Then, such mixture was subjected to a melting step, precisely it was melted at a temperature higher than 1000°C, and finally micronized by grinding to reach a frit particle size equal to 100 nm.

Separately, the inorganic pigment was mixed using dipropylenglycol diacrylate as dispersing agent; the mixture, in the presence of stabilizers, was grinded to obtain an average particle size equal to 100 nm.

A solution of photoinitiator Omnirad 819 in dipropylenglycol diacrylate was prepared, which was added, under stirring, to the mixture of frit and pigment dispersion, obtaining an ink composition curable by ultraviolet radiation according to the invention.

Such thus obtained composition had a viscosity of 30 cP at a temperature of 30°C.

The viscosity was measured according to the following procedure:
- a sample of the ink composition curable by ultraviolet radiation was placed in an Anton Paar ViscoQC100-L rotational viscosimeter equipped with a double gap geometry probe (DG26); the measure was taken at 30°C and the temperature was controlled by a Julabo thermostat;
- the impeller was driven at speed of 20 rpm and kept at such speed steadily for 5 minutes;
- the detected dynamic viscosity value was recorded.

The thus obtained ink composition curable by ultraviolet radiation consists of the following components, shown in percentage by weight based on the total weight of the composition in following Table 1:

**Table 1**

| | | |
|---|---|---|
| acrylate or methacrylate monomer | dipropylenglycol diacrylate | 55.9 |
| photoinitiator | Omnirad 819 | 1.6 |
| inorganic pigment | cobalt (II) aluminate | 14.9 |
| frit | boron alkaline frit (11%) containing zinc | 27.6 |

wherein Omnirad 819 is phenylbis(2,4,6-trimethylbenzoil)phosphinoxide, supplied from IGM Resins.

Then, the ink composition curable by ultraviolet radiation was loaded in the printing station. Meanwhile, a ceramic substrate was placed on the printing support. The ink composition curable by ultraviolet radiation in the printing head was heated bringing the printing head at the temperature of 30°C, while the ceramic substrate was kept at room temperature. Then, the printing station was operated, depositing the ink composition curable by ultraviolet radiation on the ceramic substrate based on the desired decorative pattern, operating the moving means at a speed of 40 m/min.

Within the fixing station, through the aid of fixing means, in particular of a 16-Watt ultraviolet light LED lamp with double window (40 mm x 200 mm), whose power peak was set at a wavelength of 395 nm and the irradiated power was 500 mJ/cm², the previously applied ink composition curable by ultraviolet radiation was cured, defining a decorative pattern on the ceramic substrate.

At the end of the fixing step, the thus decorated ceramic substrate was led to the firing station, fired according to a firing cycle with temperature ramp to reach a maximum temperature of 1200°C, for a total time of about one hour, in order to obtain the finished ceramic manufactured product.

Therefore, it was proven advantageously that such ink composition curable by ultraviolet radiation and the application method allow to obtain decorative methods in the ceramic field without using solvents and high temperatures, not affecting the properties of the ceramic substrate, to obtain a ceramic substrate with a decorative pattern without discoloration.

Further, the final ceramic product is obtained by an inexpensive and environmentally sustainable process, since the fixing steps were eliminated and therefore the evaporation of the organic solvents.

## Claims

1. Digital ink composition curable by ultraviolet (U.V.) radiation comprising:
- an inorganic component comprising at least one inorganic pigment and a frit;
- an organic component comprising at least one acrylate or methacrylate monomer and a photoinitiator.

2. Ink composition according to claim 1, wherein said frit comprises at least one element selected from silica and/or a solvate thereof, a silica mineral, a silicate, a metal oxide, a metal oxide-based mineral, a nonmetal oxide, a metal silicide, or any combination thereof.

3. Ink composition according to claim 2, wherein said frit comprises at least one metal oxide, said at least one metal oxide being selected from lithium oxide, sodium oxide, magnesium oxide, potassium oxide, calcium oxide, strontium oxide, barium oxide, zinc oxide, lead oxide, aluminum oxide, titanium oxide, zirconium oxide and/or any one combination thereof.

4. Ink composition according to claim 2 or 3, wherein said silicate is selected from feldspars, kaolin, phyllosilicates, preferably talc, borosilicates or any combination thereof.

5. Curable ink composition according to any one of the preceding claims 1-4, wherein said at least one acrylate or methacrylate monomer is selected from an alkyl acrylate, an alkyl methacrylate, a diol diacrylate, a diol dimethacrylate, a polyol diacrylate, a polyol dimethacrylate, a polyol triacrylate, a polyol trimethacrylate, a glycolic monomer acrylate or any combination thereof, preferably said glycolic monomer acrylate being selected from tri(propylen glycol) diacrylate (TPGDA), dipropylenglicol diacrylate (DPGDA), tri(ethylen glycol) dimethacrylate or any mixture thereof.

6. Curable digital ink composition according to any one of the preceding claims 1-5, wherein said photoinitiator is selected from phosphines, preferably acyl phosphines, phosphine oxide, thioxanthones, ketocoumarins, alpha-hydroxy-ketones, benzyldimethylketal, benzophenones, amino-ketones, ketosulphones, glioxylates or any combination thereof.

7. Curable ink composition according to any one of the preceding claims 1-6, wherein said organic component comprises additionally an acrylate oligomer, preferably said acrylate oligomer being selected from polyester acrylate, epoxy acrylate, urethane acrylate, acryl-acrylate, vinyl-acrylate, polyether acrylate or any combination thereof.

8. Curable ink composition according to any one of the preceding claims 1-7, wherein said frit is present in an amount comprised between 5% and 50%, preferably between 10% and 35%, by weight based on the total weight of the ink composition curable by ultraviolet radiation.

9. Curable ink composition according to any one of the preceding claims 1-8, wherein said inorganic pigment is present in an amount comprised between 5% and 30%, preferably between 8% and 20%, by weight based on the total weight of the ink composition curable by ultraviolet radiation.

10. Curable digital ink composition according to any one of the preceding claims 1-9, wherein said at least one acrylate or methacrylate monomer is present in an amount comprised between 15% and 75%, preferably between 40% and 65%, by weight based on the total weight of the ink composition curable by ultraviolet radiation, and/or wherein said photoinitiator is present in an amount comprised between 0.5% and 8%, preferably between 1% and 6%, by weight based on the total weight of the ink composition curable by ultraviolet radiation.

11. A process for the application of an ink composition curable by ultraviolet radiation on ceramic substrates comprising the steps of:
a) providing an ink composition curable by ultraviolet radiation according to any one of the preceding claims 1-10 and comprising an inorganic component comprising at least one inorganic pigment and a frit, and an organic component comprising at least one acrylate or methacrylate monomer and a photoinitiator;
b) providing a ceramic substrate;
c) applying on the ceramic substrate said ink composition curable by ultraviolet radiation, defining a decorative pattern;
d) fixing said ink composition curable by ultraviolet radiation on the ceramic substrate by ultraviolet radiation curing;
e) firing the thus decorated ceramic substrate.

12. Process for the application of a digital ink composition curable by ultraviolet radiation according to claim 11, wherein step a) of providing an ink composition curable by ultraviolet radiation comprises the following steps:
- grinding the frit and the inorganic pigments to obtain an inorganic component having an average particle size comprised between 50 nm and 500 nm;
- dispersing the thus obtained inorganic component in at least one acrylate or methacrylate monomer to form a dispersion;
- adding at least one photoinitiator to the previously thereby obtained dispersion to obtain an ink composition curable by ultraviolet radiation.

13. Process for the application of ink compositions curable by ultraviolet radiation according to claim 11 or 12, wherein during step c) of application the ink composition curable by ultraviolet radiation has a viscosity comprised between 5 cP and 50 cP, measured at a temperature comprised between 20°C and 60°C.

14. Process for the application of an ink composition curable by ultraviolet radiation according to claims from 11 to 13, wherein said step of curing d) is performed by means of a LED lamp or a mercury vapor lamp, preferably said mercury vapor lamp concentrating a power peak at a specific wavelength comprised between 150 nm and 420 nm or said LED lamp concentrating a power peak at a specific wavelength comprised between 385 nm and 405 nm.

15. Ceramic manufactured product obtainable by the process according to any one of claims from 11 to 14.
